(19) Europäisches Patentamt

European Patent Office

Office européen des brevets

(11) **EP 0 971 509 A1**

(12) **EUROPEAN PATENT APPLICATION**

(43) Date of publication:
**12.01.2000 Bulletin 2000/02**

(51) Int Cl.⁷: **H04L 12/56**, H04L 12/40

(21) Application number: **98112500.8**

(22) Date of filing: **06.07.1998**

| | |
|---|---|
| (84) Designated Contracting States:<br>**AT BE CH CY DE DK ES FI FR GB GR IE IT LI LU**<br>**MC NL PT SE**<br>Designated Extension States:<br>**AL LT LV MK RO SI**<br><br>(71) Applicants:<br>• Sony International (Europe) GmbH<br>**50829 Köln (DE)**<br>• Sony Electronics Inc.<br>**Park Ridge, New Jersey 07656-8003 (US)** | (72) Inventors:<br>• Schwager, Andreas,<br>**c/o SONY Internat.(Europe) GmbH**<br>**70736 Fellbach (DE)**<br>• Gibbs, Simon<br>**Sunnyvale, CA 94086 (US)**<br><br>(74) Representative: **Müller, Frithjof E., Dipl.-Ing.**<br>**Patentanwälte**<br>**MÜLLER & HOFFMANN,**<br>**Innere Wiener Strasse 17**<br>**81667 München (DE)** |

(54) **Bandwidth reservation**

(57)     The setup of a new connection inbetween at least two nodes in a network with preventing to overload a node (1, 2, 3) or the network bus (5) or the air at a radio network is conducted with the help of a plug traffic list for each node that shows its total ability to sink or/ and receive, the outgoing communications and the incoming communications and a bus traffic list showing the load of the bus (5). According to the inventive method, a node (1, 2, 3) that wants to establish a new communication has first to check whether all nodes (1, 2, 3) that are planned to participate at the new connection have enough capacity to handle the additional plug traffic, whereafter the capacities of the network bus (5) are checked. If either one node (1, 2, 3) or the bus (5) has not enough capacities, it is possible for the node (1, 2, 3) that prefers a new connection to pre-empt other connections. The invention works on networks that support various transmission speeds between two communication partners.

Fig. 3

EP 0 971 509 A1

**Description**

This invention concerns a method to reserve bandwidth for a connection of at least two nodes connected to each other via a radio network or a wired network, especially a network comprising a resource manager, e.g. the isochronous recource manager of an IEEE 1394 network.

Generally, networks like IEEE 1394 based home networks offer a limited amount of bandwidth to all connected communication devices. Bandwidth is a global resource in the network. If one device allocated a certain amount of bandwidth, another device cannot use this bandwidth anymore. Intelligent networks have a mechanism to allocate and release bandwidth via a resource manager. This resource manager handles all requests and releases of bandwidth allocation in the network.

However, a home network like the IEEE 1394 based network or a network described in IEC 61883 have various possibilities regarding different transmission speeds and/or capacities of the bus itself and the connected devices. It is possible that one device needs more bandwidth than on the network available and that bandwidth has to be transferred from one device to another. Furtheron, it is easily possible that the resource manager overloads a plug, i. e. a device connected to the network, when only observing the available bandwidth on the network.

Therefore, it is the object of the present invention to provide a method for bandwidth management on a network and on the connection plugs of all devices preventing the overload of the network and of the devices connected thereto.

The inventive method to reserve bandwidth for a communication of at least two nodes connected to each other via a network comprising a resource manager is characterized in that a node preparing a new connection starts a request, if each of the nodes that are planed to participate at the new connection has enough resources to participate at said new connection, and requests the needed network bandwidth with the resource manager.

According to this inventive proposal every plug has to check, if the received bandwidth overloads the device or not, and the network bandwidth for the bus is requested. The various transmission speeds on the bus and the various data rates a node connected to the bus is able to sink or send maximal with the transmission speed of the node are respectively handled by a management system that has an easy access to the needed information. So every plug, i. e. node, connected to the bus and planned to participate at a new connection knows his possibilities to sink or send various data rates maximal with its possible transmission speed and knows his left capacities. On the other hand. the resource manager is able to decide if a certain connection on the bus itself is possible or not. With first registering a planned new connection at each plug that is planned to participate, the resource manager is held free of unnecessary registration traffic for the case that the network has enough capacity to allow a new communication, but at least one of the nodes participating is fully loaded, i.e. can not handle the planned new connection any more. On the other hand, when the requests are performed vice versa, the registering of the needed bandwidth at each plug can be omitted when the network bandwidth for the new connection requested with the recource manager is not available.

Advantageous embodiments of the inventive method defined in independent claim 1 are defined in dependent claims 2 to 17.

The present invention and further objects, features and advantages will be better understood from the detailed description of exemplatory advantageous embodiments thereof taken in conjunction with the accompanying drawings, wherein

**Figure 1**    shows an example of plug traffic lists of network nodes;
**Figure 2**    shows an example of the bus traffic list(s) of a network;
**Figure 3**    shows an example of the setting-up of a new connection within the network;
**Figure 4**    shows a conflict at plug allocation while setting up a new connection; and
**Figure 5**    shows a conflict at bus bandwidth allocation while setting up a new connection.

In all Figures the same referencesigns denode the same or like devices.

According to the present invention the plug traffic of every node has to be registered so that it can be checked during preparing a new connection. In the shown embodiment every plug stores the information he needs to identify a communication itself. The numbers shown in this example represent the bandwidth that is used by a communication or free on the bus, e. g. 50 Mbit/s.

The following data has to be stored at/for every node:

- The total ability to sink or/and receive,
- the outgoing communication, and
- the incoming communications.

Therefore, it is possible for every plug, i.e. node or device, to check if an additional communication is possible or not.

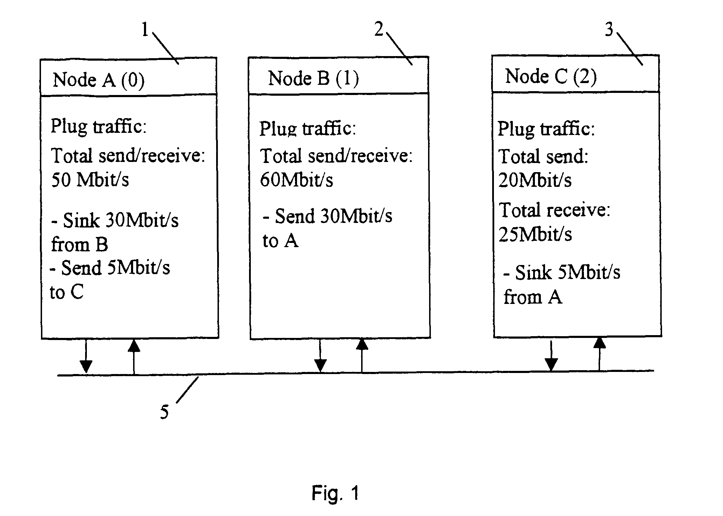

Figure 1 shows an example of plug traffic lists that show two communications. A node A 1, a node B 2 and a node C 3 are connected to a bus system 5. In the shown example every node stores its own plug traffic list.

Node A 1 has a total send/receive capacity of 50 Mbit/s. and has registered that it sinks 30 Mbit/s from node B 2 and sends 5 Mbit/s to C 3. Node B 2 has a total send/receive capacity of 60 Mbit/s and has registered that it sends 30 Mbit/s to node A. Node C 3 has a total send capacity of 20 Mbit/s and a total receive capacity of 10 Mbit/s and has registered that it sinks 5 Mbit/s from node A 1.

Therefore, it can be seen that for nodes A 1 and B 2 it does not matter whether they send or receive as long as the bandwidth needed to send and/or to receive is within their respective capacity, whereas node C 3 is restricted to certain data rates respectively for sending and receiving. Furtheron, a first communication can be identified from node B 2 to A 1 with a data rate of 30 Mbit/s and a second communication can be identified with a data rate of 5 Mbit/s from node A 1 to node C 3.

Therefore, every node can determine whether it can handle an additional communication or not. For example node A 1 has a total load of 35 Mbit/s and therefore a rest capacity of 50 Mbit/s - 35 Mbit/s = 15 Mbit/s. For node B 2 it is possible to send and/or receive a total of further 30 Mbit/s and for node C 3 it is possible to receive further 25 Mbit/s and to send further 20 Mbit/s.

It is also possible that not every node stores its plug traffic list itself as long as a plug traffic list of every node exists, gets actualised and can be accessed by the respective node and/or a node that is setting-up a new communication.

Only with the knowledge of the capabilities of the single nodes it is not possible to determine if a new communication is possible or not. It has also to be checked, if the bus connecting the various nodes can handle the additional traffic. Therefore, the resource manager handling the allocation of bandwidth at the bus has to have access to a bus traffic list showing how the bus is loaded with the various transmission speeds to determine, if an additional communication on the bus will be possible or not.

The bus traffic list can be available at the network only once, e. g. within the resource manager or a certain node, or can be stored at every node. In case that the bus traffic list is stored only once by one device within the network it has to be secured that the bus traffic list will be transferred to another device in case the device storing the unique bus traffic list will be switched-off. This has also to be taken into account when storing the plug traffic lists of all nodes centralized in only one device within the network. In case the bus traffic list is stored more than once within the network it has to be secured that every stored list has the same entries, i.e. will get updated.

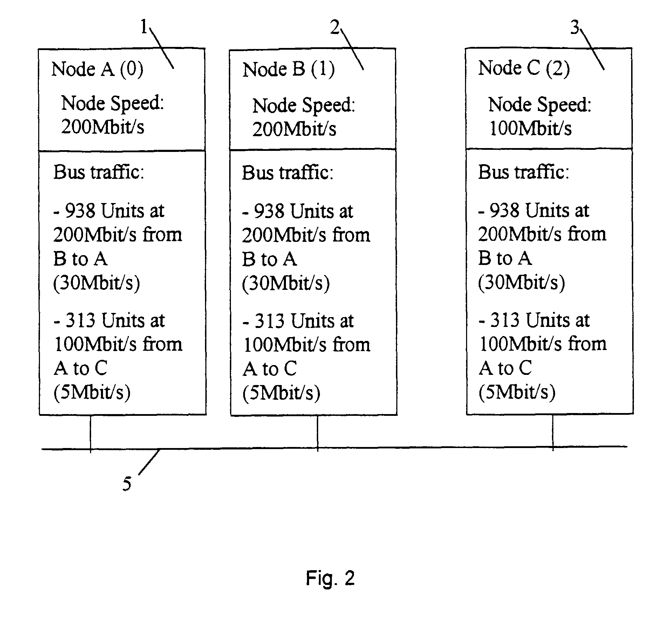

In the example shown in Figure 2 the bus traffic lists is stored in every node. The entries in the shown example are the bandwidth allocation units and the communication speed on an IEEE 1394 bus. If an application wants to calculate the used bandwidth of a communication it has to use the following equation:

$$\text{bandwidth} = ((\text{units} \cdot 20 \text{ ns})/125000 \text{ ns})) \cdot \text{speed}$$

$$\text{e. g. } ((938 \text{ units} \cdot 20 \text{ ns})/125000 \text{ ns})) \cdot 200 \text{ Mbit/s} = 30 \text{ Mbit/s},$$

since one time frame of the IEEE 1394 bus has a length of 125000 ns and is devided into 6144 units of 20 ns, each transmitting 2 bits at a speed of 100 Mbit/s.

In the shown example every node watches the bus traffic, therefore every node is able to check, if an additional communication is possible on the bus or not. The three nodes that are also shown in Figure 1 store besides the plug traffic lists as it is shown in Figure 1 their respective node speed and the bus traffic list. Every node has also a unique node number within the network that is automatically assigned e.g. by the recource manager.

Node A 1 has a node speed to send and/or receive data of 200 Mbit/s, node B 2 has also a node speed to send/receive data of 200 Mbit/s and node C 3 has a node speed to send/receive data of 100 Mbit/s.

The bus traffic list stored in every node in the shown example has two entries, namely that of the first communication showing that 938 units are sent every time frame at 200 Mbit/s from node B 2 to node A 1, i. e. a communication having a bandwidth of 30 Mbit/s, and the second communication needing 313 units every time frame that a transmission speed of 100 Mbit/s from node A 1 to node C 3, namely a communication having a bandwidth of 5 Mbit/s.

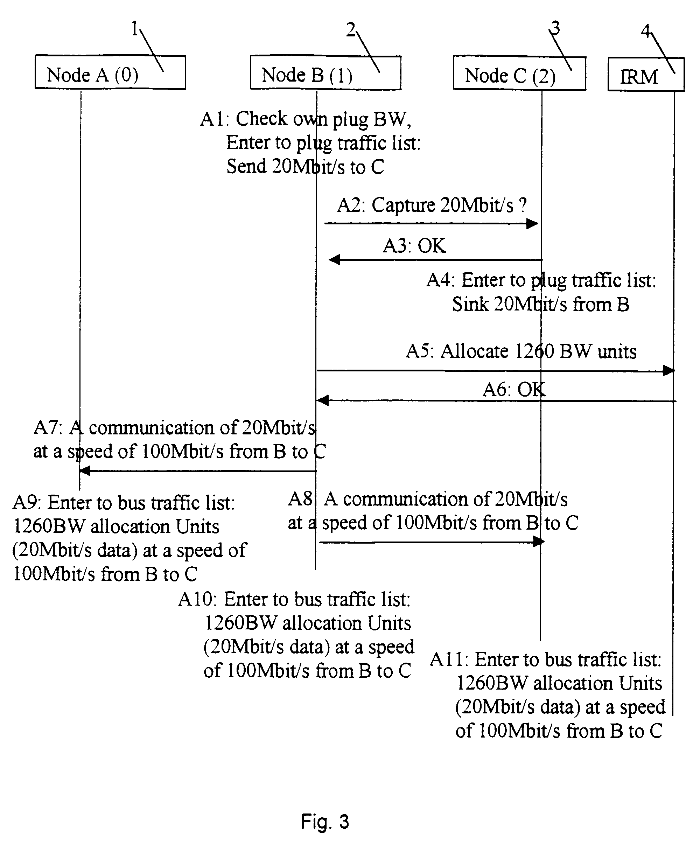

By observing those both lists, it is possible for every node to check, if an additional communication within the network is possible. Figure 3 shows an example of the bandwidth allocation for a new communication. In the shown example node B 2 wants to set up a third communication to send data with a bandwidth of 20 Mbit/s at a speed of 100 Mbit/s to node C 3.

First, all nodes that are planned to participate at the new communication have to be checked whether they have enough capacities for this planned new communication or not. Since in the shown embodiment all nodes store their own plug traffic lists, all to the communication involved plugs have to be asked, if the additional bandwidth is possible for them to handle or not. To avoid deadlock problems, namely when two nodes want to reserve bandwidth at the same time, the nodes have to be asked in a predetermined order, e. g. in the order of the both node numbers.

As mentioned above, a bus node number is unique number of a node connected to the network assigned to the node by the resource manager. In the shown example the node A 1 has the bus node number 0, the node B 2 has the bus node number 1 and the node C 3 has the bus node number 2. Under the assumption that n nodes are present in the network, the predetermined order of sending requests from one node to the others according to this example is first node 0 if involved, than node 1 if involved, ... at last node n - 1. The available plug traffic bandwidth of the own node, i. e. the requesting node, will also be checked in the order of the node numbers, neither first nor last (only if the own number is the lowest or highest node number of all involved nodes).

A deadlock in this context means that two nodes are requesting and reserving bandwidth of other nodes at the same time and it is in the following not possible to properly set up both connections, since the total system has not enough capacities therefore. In this case, it is also not possible to set up at least one connection of these both being within the system capacity, since both devices are blocking each other with their "synchronized" request. Such a deadlock would e.g. happen when node A 1 would first reserve his own bandwidth, e.g. to send picture data to node B 2, and is then fully loaded, and at the same time node B 2 would reserve his own bandwidth, e.g. to send audio data to node A 1, and is then fully loaded. When now either of the nodes A 1 or B 2 requests bandwidth for its planned communication, the respective other node will refuse.

If a plug agrees to the communication it has to enter the communication to its plug traffic list. Entering the communication means to enter whether to sink or to send the requested data rate.

In case the plug traffic list is stored in another device than the node itself, it is self-evident that the node itself that is planned to participate at the new communication has not neccessarily to be involved in the checking procedure whether an additional reservation of bandwidth is possible or not and has not neccessarily to update its corresponding plug traffic list itself.

Figure 3 shows the network shown in Figures 1 and 2. In the example shown in Figure 3 node B 2 wants to prepare a new communication to send data with a bandwidth of 20 Mbit/s at a speed of 100 Mbit/s to node C 3. Therefore, the involved nodes for this new communication are node B 2 having the node number 1 and node C 3 having the node number 2. The predetermined order defines that node B 2 has first to check its own plug traffic lists for the needed bandwidth, since its node number 1 is lower than node number 2 of node C 3 that is the only other involved node in this case, that is done in step A1. Since node B 2 has a rest capacity of 30 Mbit/s, see Figure 1, it has enough capacities for the planned new communication and can make a new entry to its plug traffic list, namely send 20 Mbit/s to node C 3. Furtheron, node B 2 sends a request to node C 3, whether node C 3 has enough capacities to handle the planned new communication or not. Therefore, in step A2 it requests whether it is possible to capture a communication with 20 Mbit/s to node C 3. Since node C 3 has a rest capacity to receive 20 Mbit/s, see Figure 1, it sends a positive message to node B 2 in step A3 and enters this new communication to its plug traffic list in step A4, namely sink 20 Mbit/s from node B 2.

If all involved plugs are able to handle the new communication, the bandwidth on the bus has to be allocated at the resource manager, e.g. the isochronous resource manager of the IEEE 1394 home network. At bandwidth allocation there are no deadlock problems possible, since there is only one device deciding if the load of the bus traffic allows an additional communication, namely the isochronous resource manager. In case the bus traffic list is stored in every node, a node that receives a positive message from the resource manager 4 has to inform all other nodes present at the network of the new communication. Every node that receives this information has to enter the communication to its bus traffic list. This information procedure can be done in an arbitrary order. As mentioned above, the other solution, to implement the bus traffic list only in one node, needs a protocol mechanism to move the table to another node, if the host of the table is powered down.

Node B 2 has received only positive messages from the nodes participating at the planned new connections, i. e. the planned new connection is possible for himself and for node C 3. Therefore, it is possible for node B 2 to request the needed bandwidth with the resource manager 4. This is done in step A5 with the request to allocate 1260 bandwidth units. Since the bus traffic list has a momentary load of 1251 units, see Figure 2, it is possible to allocate 1260 bandwidth units for the planned new communication of node B 2 to C 3. Therefore, the resource manager 4 sends a positive message to node B 2 in step A6.

In case only one bus traffic list is available in the network only the device storing the bus traffic list has to update this list, i. e. the resource manager 4 or the node B 2 would respectively be able to update the stored bus traffic lists without any additional communication. In case of the exemplatory descriptive embodiment the bus traffic list is stored in every node connected to the network, as it is shown in Figure 2. Therefore, the bus traffic list has to be updated in every place where it is stored. This updating operation has not to be performed in the same predfined order of the node numbers, as described before, since no deadlock is possible. Following therefrom, the node B 2 informs node A 1 in a step A7 that a communication of 20 Mbit/s is performed from node B 2 to node C 3 at a speed of 100 Mbit/s, whereafter node A 1 enters in step A9 to its bus traffic list that 1260 bandwidth allocation units, that correspond to 20 Mbit/s of data, are reserved for a communication from node B 2 to node C 3 at a speed of 100 Mbit/s. In the following steps A11 and A12 node C 3 is informed of the new communication in the same way as node A 1 and updates its sort bus traffic lists as node A 1 has done it before, at last node B 2 enters this entry to its own stored bus traffic list in step A10 as the other nodes have done it before.

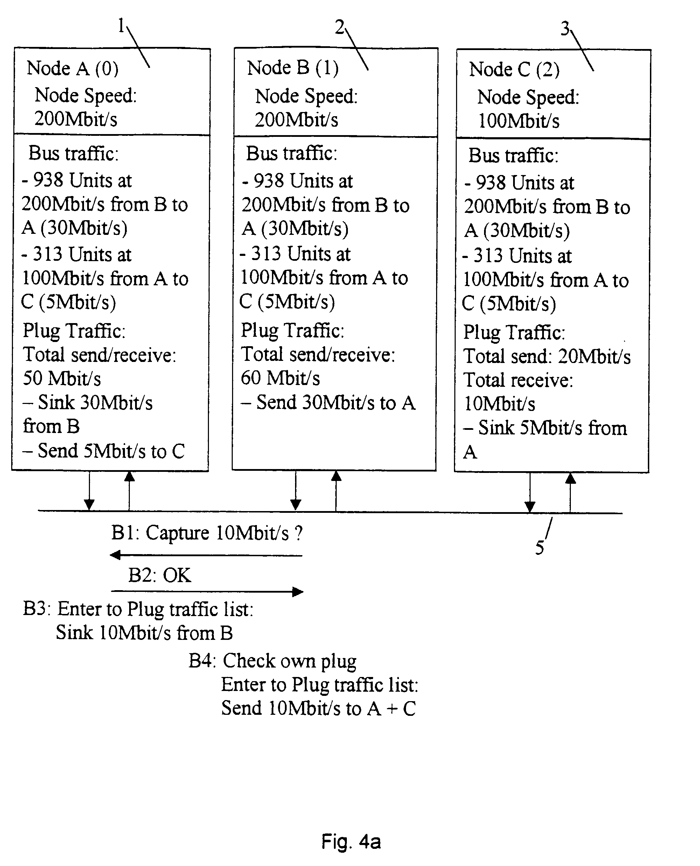

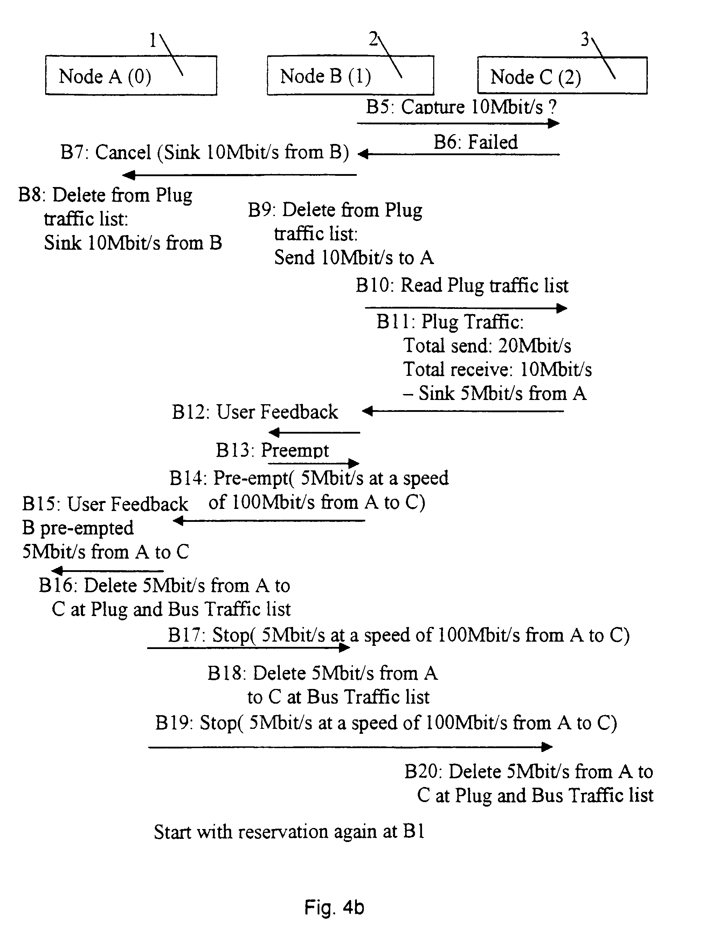

Figure 4 shows another network having a node A 1 with node number 0, a node B 2 with node number 1 and a node C 3 with node number that are connected via a bus system 5 and are working according to the present invention. Additionally, a recource manager 4 is also connected to said bus 5.

The node A 1 has a node speed of 200 Mbit/s, stores a bus traffic list with two entries, namely a first communication of 938 units at 200 Mbit/s from node B 2 to node A 1, i. e. a bandwidth of 30 Mbit/s, and a second communication of 313 units at 100 Mbit/s from node A 1 to node C 3, namely a communication of 5 Mbit/s, and stores its plug traffic list that shows a total send/receive capacity of 50 Mbit/s, and entries that node A 1 sinks Mbit/s from node B 2 and sends 5 Mbit/s to node C 3.

Node B 2 has a node speed of 200 Mbit/s, stores the same bus traffic list as node A 1, and its plug traffic list showing a total send/receive capacity of 60 Mbit/s and an entry that node B 2 sends 30 Mbit/s to node A 1.

Node C 3 works with a node speed of 100 Mbit/s, stores the same bus traffic list as nodes B 2 and A 1 and stores it plug traffic list showing a total send capacity of 20 Mbit/s, a total receive capacity of 10 Mbit/s and an entry that node C 3 receives 5 Mbit/s from node A 1.

Figure 4 shows an example of a conflict at the plug allocation. Here, node B 2 wants to establish a new broadcast communication of 10 Mbit/s at a speed of 100 Mbit/s to nodes A 1 and C 3. Since node C 3 has only a rest capacity to sink 5 Mbit/s, there will be a conflict at this node.

To avoid the deadlock problem, node B 2 requests in the predetermined order of e. g. the node numbers if the planned additional new communication will be possible for the respective nodes. In a first step B1 a request is sent from node B 2 to node A 1 if it is possible to capture bandwidth of 10 Mbit/s. Since node A 1 has a rest capacity of 15 Mbit/s total send/receive bandwidth, a positive message can be returned to node B 2 from node A 1 in step B2 and the new communication of receiving 10 Mbit/s from node B 2 gets entered to the plug traffic list of node A 1 in step B3. Thereafter, node B 2 checks its own plug traffic whether this planned new communication is possible and enters the new communication of sending 10 Mbit/s to nodes A 1 and C 3 in step B4, since it has a rest capacity of 30 Mbit/s. The last node to be requested for the available bandwidth is the node with the highest node number in this case, namely the node C 3 that gets asked by node B 2 in step B5 if 10 Mbit/s can be captured. Since node C 3 has a rest capacity of receiving 5 Mbit/s, it is not possible that it can sink another 10 Mbit/s. Therefore, it sends a negative message to node B 2 in step B6.

If the plug bandwidth reservation failed the former entries in the plugs that have already given a positive message have to be deleted. Since no deadlock is possible in this case, such a deletion can be done in an arbitrary order. Therefore, node B 2 informs node A 1 in step B7 to cancel the entry of sinking 10 Mbit/s from node B 2 and node A 1 deletes this entry from its plug traffic list in step B8. Thereafter, node B 2 deletes the corresponding entry of sending 10 Mbit/s to node A 1 from its own plug traffic lists in step B9.

If such a planned new communication was instructed by a user, node B 2 shall generate a user feedback that should be as comprehensive as possible. If there are several possibilities to cancel another communication so that the planned new communication might be successfully installed, all choices should be shown to the user which then may select any other communication to be cancelled. Otherwise, if this communication was set up on its own or somehow else pre-programmed by a user, node B 2 might decide on its own which communication should be cancelled to successful install the planned new communication with the help of priority lists or any other thinkable mechanism, i. e. simply to cancel the smallest other communication that allows a successful set-up of the planned new communication. Therefore, to get all necessary information for either the user feedback or the own decision, node B 2 sends in step B10 a request to node C 3 that has send the negative message in step B6 to read the plug traffic list of node C 3. In step B11 node C 3 sends its plug traffic list to node B 2 having the entries of a total send capacity of 20 Mbit/s, a total receive capacity of 10 Mbit/s and a bandwidth reservation of sinking 5 Mbit/s from node A 1. Thereafter, node B 2 generates and displays a user feedback in step B12 and the user inputs a pre-empt instruction to node B 2 in step B13.

Based on this user feedback, node B 2 has to achieve that the communication of 5 Mbit/s from node A 1 to node C 3 has to be cancelled. Since only a node that sends data to another node can cancel the communication, node A 1 gets informed from node B 2 in step B14 that the communication of 5 Mbit/s at speed of 100 Mbit/s from node A 1 to node C 3 will be pre-empted. In step B15 node A 1 generates a user feedback that node B 2 has pre-empted the communication of 5 Mbit/s from node A 1 to node C 3. In step B16 node A 1 deletes the entry of the second communication, i. e. 5 Mbit/s from node A 1 to node C 3 at the bus traffic list and its plug traffic list. Thereafter, node A 1 informs the other nodes, namely node B 2 and node C 3 that the second communication, namely the communication of 5 Mbit/s at a speed of 100 Mbit/s from node A 1 to node C 3 has been stopped respectively in steps B17 and B19. In step B17 node B 2 got informed from node A 1 and therefore deletes the second communication in step B18 from its stored bus traffic list. Since node C 3 got informed from node A 1 in step B19 it deletes the second communication in step B20 from its stored bust traffic list and its plug traffic list. It is self-evident that node A 1 also stopps the communication of sending data with a maximal bandwidth of 5 Mbit/s to node C 3 after the pre-emption.

Thereafter, node B 2 can start with the reservation procedure again in step B1.

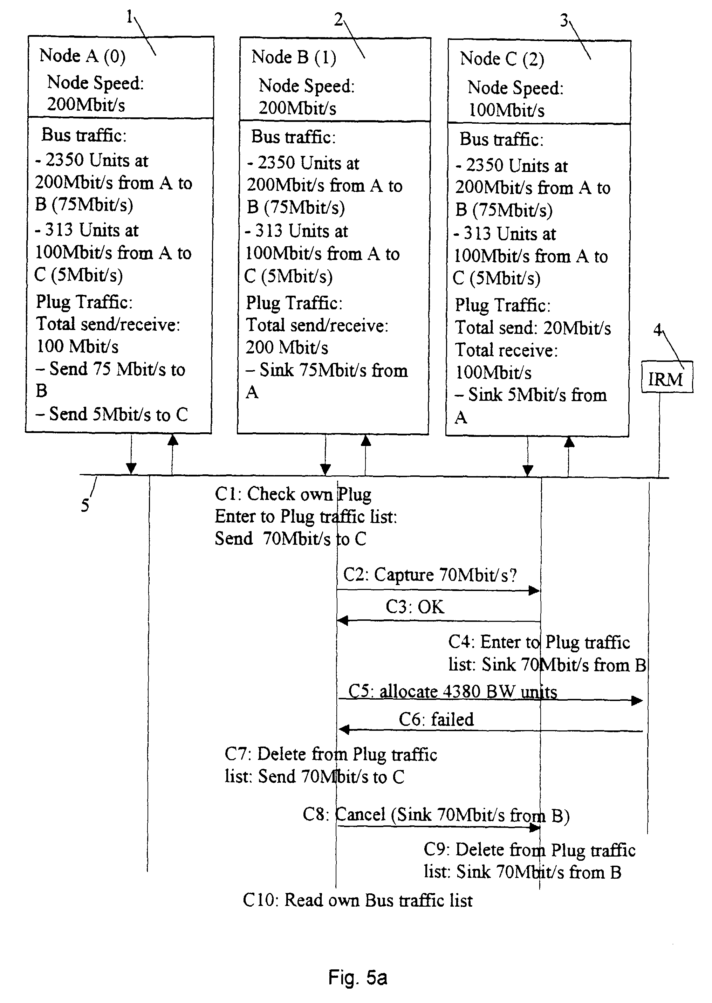

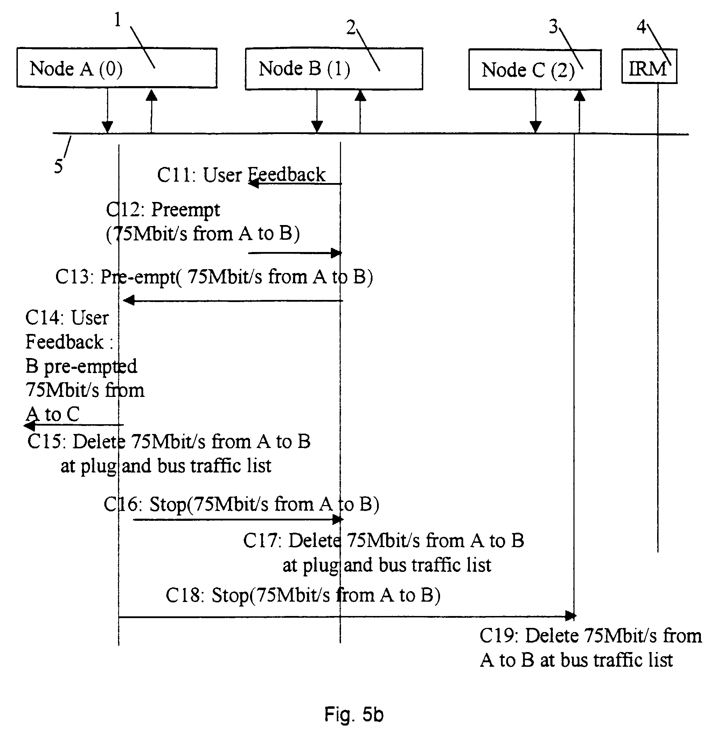

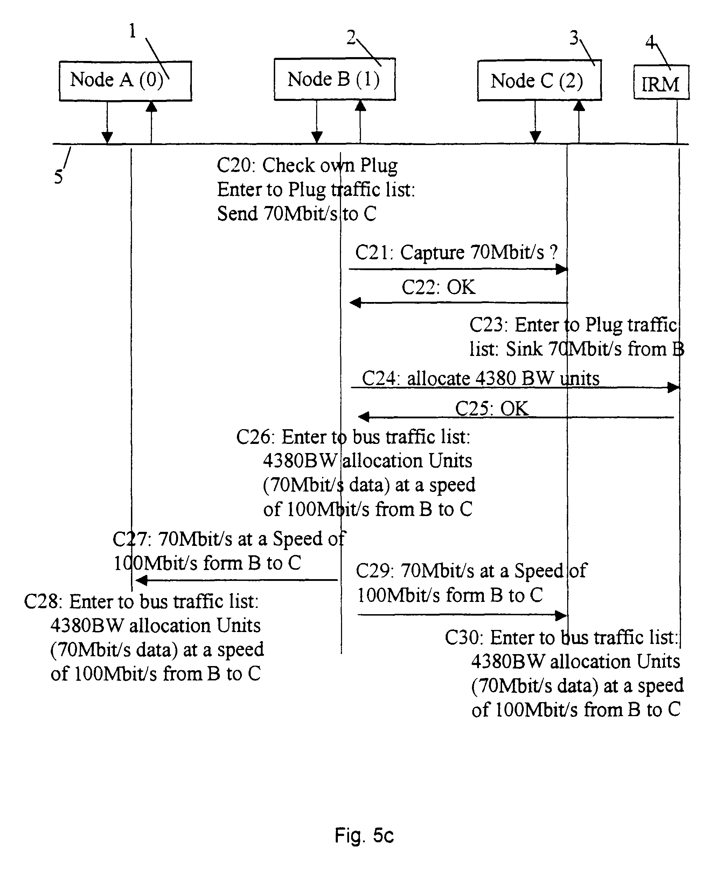

Figure 5 shows an example of a conflict at the bus bandwidth allocation. In the shown example a network consists of three nodes 1, 2, 3 connected to a bus 5 and a recource manager also connected to said bus 5. Node A 1 with the node number 0 and a node speed of 200 Mbit/s stores a bus traffic list with two entries, namely a first communication with 2350 units at 200 Mbit/s from node A 1 to node B 2, i.e. a bandwidth of 75 Mbit/s, and a second communication with 313 units at a speed of 100 Mbit/s from node A 1 to node C 3, namely a bandwidth of 5 Mbit/s. Furtheron, the plug traffic list of node A 1 that is also stored within the node according to this example, shows that the total send/ receive capacity of node A 1 is 100 Mbit/s and that node A 1 sends 75 Mbit/s to node B 2 and 5 Mbit/s to node C 3. Node B 2 that is also connected to the bus 5 has the node number 1 and a node speed of 200 Mbit/s. It also stores the same bus traffic list as node A 1. Furtheron, the plug traffic list of node B 2 that is also stored within this node shows that node B 2 has a total send/receive capacity of 200 Mbit/s and node B2 sinks 75 Mbit/s from node A 1. Node C 3 also connected to the bus 5 has the node number 2 and a node speed of 100 Mbit/s. It stores the same bus traffic list as node A 1 and node B 2 and a plug traffic list that shows that node C 3 has a total send capacity of 20 Mbit/ s, a total receive capacity of 100 Mbit/s and that node C 3 receives 5 Mbit/s from node A 1.

Node B 2 prepares to set up a new communication of 70 Mbit/s at a speed of 100 Mbit/s to node C 3. On the bus 5 of the network 2663 units out of the 6250 units available in one time frame are already used. A communication of 70 Mbit/s corresponds to 4380 bandwidth units which are not fully available, since the rest capacity of the bus 5 is at most 3587 units, i.e. 6250 units minus 2663 units, from which some have to be reserved for control commands in-between the nodes 1, 2, 3 and/or the recource manager 4. Therefore, like in the case described in connection with Figure 4, there must be a function to get the needed bandwidth and to allocate it on the network.

In the example shown in Figure 5, node B 2 checks first its own capabilities regarding the newly planned connection according to the predetermined order, e.g. the ascending order of the node numbers, and consequently enters an entry to its plug traffic list to send 70 Mbit/s to node C 3 in a step C1, since node B 2 has the lowest node number, i.e. 1, of all nodes that are planned to partiicpate at the new connection. In the next step C2, it sends a request to node C 3 to capture 70 Mbit/s. Since node C 3 has a rest receive capacity of 95 Mbit/s, it sends a positive message to node B 2 in step C3 and enters an entry to its plug traffic list to sink 70 Mbit/s from node B 2 in a further step C4.

Node B 2 has only received positive messages from the nodes that are planned to participate at the new connection, namely from itself and from node C 3, and therefore requests to allocate 4830 bandwidth units for the new connection of 70 Mbit/s at the bus 5 to the resource manager 4 in a step C5. Since only 3587 bandwidth units are available on the bus 5, as explained above, the resource manager 4 returns a negative message to node B 2 in a step C6. Therefore, node B 2 has to arrange that all entries regarding the newly planned connection are deleted from the plug traffic lists of the node that are planned to participate at the new connection. Therefore, node B 2 deletes the entry send 70 Mbit/s to C from its plug traffic list in a step C7, and sends a cancel message to node C 3 that this node should cancel its entry regarding the newly planned connection in a step C8. Therefore, node C 3 deletes the entry sink 70 Mbit/s from node C 3 in a step C9 from its plug traffic list.

If the bandwidth reservation failed due to a negative message of the resource manager 4, e.g. the isocronous resource manager 4 of an IEEE 1394 network system, the former entries to bus or plug traffic lists have to be deleted as explained before. Thereafter, a user feedback should be generated that should be as comprehensive as possible. If there are several possibilities for a user to cancel a communication so that the newly planned communication can be satisfactorily set up, all choices should be shown to the user, which then may select any.

To generate such a comprehensive user feedback, node B 2 reads its own bus traffic list in a step C10, based on which the user feedback is generated and output in a step C11. Node B 2 can read only its own bus traffic list, since all bus traffic lists available in the network should always have the same entries. If only one bus traffic list is available in the network, node B 2 would have to read this bus traffic list in step C10. After the user feedback in step C11, node B 2 receives a pre-emption command from the user or another device in step C12 to pre-empt the communication of 75 Mbit/s from node A 1 to node B 2.

Since the node sending the data has to cancel the data stream, node B 2 sends in a step C13 a pre-emption command to node A 1 to pre-empt the first communication, i.e. 75 Mbit/s from node A 1 to node B 2. Node A 1 generates a user feedback that the first communication got pre-empted by node B 2 in step C14 and deletes this first communication in step C15 from its plug and traffic lists. Thereafter, node A 1 distributes a message to node B 2 that node B 2 should delete the entries regarding the first communication, whereafter node B 2 deletes them from its plug and bus traffic lists in step C17. Furtheron, node A 1 communicates the message transmitted in step C16 to node B 2 also to node C 3 in a step C18, whereafter node C 3 deletes the entry regarding the first communication from its bus traffic list. Therewith, all bus traffic lists stored in the different nodes A 1, B 2 and C 3 comprise the same entries again and the bus now has a rest capacity of 5937 units per time frame, what means that the 4380 bandwidth units needed for the planned new communication can be allocated from node B 2 again. Also, all entries in the respective plug traffic lists regarding the pre-empted communication have been deleted and it is self-evidentthat also the communication itself has been stopped.

Therefore, node B 2 checks its own capacity and enters the planned new communication send 70 Mbit/s to node C 3 to its plug traffic list in a step C20, like in step C1 before. Thereafter, node B 2 requests to capture the bandwidth of 70 Mbit/s at node C 3 in a step C21, like in step C2 before, whereafter it gets a positive message from node C 3 in a step C22, like in step C3 before. Node C 3 then enters the corresponding entry to its plug traffic list in step C23 to sink 70 Mbit/s from node B 2, like in step C4 before.

Since node B 2 has only received positive messages from all nodes that are planned to participate at the new connection, namely from itself and from node C 3 (like before), it requests in a step C24 to allocate 4380 bandwidth units on the bus 5 at the isocronous resource manager 4, as in step C5 before. Since now the bus 5 has enough rest capacities, the isocronous resource manager 4 replies with a positive message in step C25, whereafter node B 2 enters an entry about this new communication to its bus traffic list in step C26 that 4380 bandwidth units have been allocated at a speed of 100 Mbit/s from node B 2 to node C 3, i.e. a data rate of 70 Mbit/s. In step C27, node B 2 informs node A 1 of this communication which updates its bus traffic list in step C28 to have the same entry as the bus traffic list of node B 2. In step C29, node B 2 informs node C 3 of this new communication, which updates its bus traffic list in step C30 to have the same entries than both other nodes.

The invention has been described in connection with the IEEE 1394 home network bus system and on IEC 61883, but it is not restricted thereto. The described methods to reserve bandwidth for a communication of at least two nodes connected to each other via a network comprising a resource manager are also applicable to other networks than home networks with consumer electronic devices. The invention is applicable on wired networks with and without additional wireless connections and also on complete wireless networs. In case the network comprises at least one wireless connection, bandwidth is a more limited recource. Of course, one embodiment according to the present invention can comprise more than one or all of the examples described before.

**Claims**

1. Method to reserve bandwidth for a connection of at least two nodes (1, 2, 3) connected to each other via a network (5) comprising a recource manager (4), **characterized in that** a node (2) preparing a new connection starts a request, if each of the nodes (2, 3; 1, 2, 3) that are planned to participate at the new connection has enough recources to participate at said new connection, and requests the needed network bandwidth with the recource manager (4).

2. Method according to claim 1, **characterized in that** the answer on a request, if a node (2, 3; 1, 2, 3) has enough recources to participate at a new connection, is decided based on a plug traffic list of the maximal bandwidth the respective node (2, 3; 1, 2, 3) can handle and its bandwidth already reserved for other purposes.

3. Method according to claim 2, **characterized in that** any node (1, 2, 3) is able to request the plug traffic list of any node (1, 2, 3).

4. Method according to claim 2 or 3, **characterized in that** the planned new connection is entered into said plug traffic list of the respective node (2, 3; 1, 2, 3), if said node (2, 3; 1, 2, 3) has enough recources to participate at said new connection.

5. Method according to claim 2, 3 or 4, **characterized in that**

   said plug traffic list of a respective node (2, 3; 1, 2, 3) is stored within said respective node (2, 3; 1, 2, 3), said request, if each of the nodes (2, 3; 1, 2, 3) that are planned to participate at the new connection has enough recources to participate at said new connection, is performed by requesting every node (2, 3; 1, 2, 3) that is planned to participate at the new connection, if it has enough recources to participate at said new connection, and a requested node (2, 3; 1, 2, 3) makes an entry concerning the planned new connection into its plug traffic list and transmits a positive message to the requesting node (2), if it has enough recources to participate at said new connection, otherwise it transmits a negative message to the requesting node (2).

6. Method according to claim 5, **characterized in that** said requesting of every node (2, 3; 1, 2, 3) is performed in a predefined order.

7. Method according to claim 5 or 6, **characterized in that** a node (2) receiving a negative message from another node (3) arranges to delete all entries regarding the planned new connection from the plug traffic lists of all nodes (2; 1, 2) that have already given a positive message regarding the request, if it respectively has enough recources to participate at said new connection.

**8.** Method according to claim 2, 3 or 4, **characterized in that**

said plug traffic list of a respective node (2, 3; 1, 2, 3) is stored centralised for all nodes (1, 2, 3) within said network,
said request, if each of the nodes (2, 3; 1, 2, 3) that are planned to participate at the new connection has enough recources to participate at said new connection, is performed by requesting the centralised storage, if every node (2, 3; 1, 2, 3) that is planned to participate at the new connection has enough recources to participate at said new connection, and
the centralised storage makes an entry concerning the planned new connection into the plug traffic lists of all involved nodes (2, 3; 1, 2, 3) and transmits a positive message to the requesting node (2), if every node (2, 3; 1, 2, 3) that is planned to participate at the new connection has enough recources to participate at said new connection, otherwise it transmits a negative message to the requesting node (2).

**9.** Method according to claim 8, **characterized in that** the function of said centralised storage can be performed by any device (1, 2, 3, 4) connected to the bus (5) of the network.

**10.** Method according to claim 8 or 9, **characterized in that** said centralised storage checks every node (2, 3; 1, 2, 3) regarding its capabilities in a predefined order.

**11.** Method according to anyone of claims 5 to 10, **characterized in that** a node (2) receiving a negative message regarding the available recources of nodes (3) that are planned to participate at said new connection can pre-empt an existing connection to allow the set-up of the planned new connection by instructing a node (1) that has established a connection to another node (3) by reserving bandwidth to shut-down the connection.

**12.** Method according to anyone of claims 1 to 11, **characterized in that** the recource manager (4) receiving a request to reserve bandwidth for a new connection within the network, decides whether this is possible based on a bus traffic list of the already reserved bandwidth of the bus (5).

**13.** Method according to claim 12, **characterized in that** the recource manager (4) sends a positive message to the requesting node (2), if the bus (5) has enough recources to participate at said new connection, otherwise it sends a negative message to the requesting node (2).

**14.** Method according to claim 13, **characterized in that**

said bus traffic list of is stored within at least one node (1, 2, 3) connected to the network or the recource manager (4), and
a node (2) receiving a positive message from the recource manager (4) or the recource manager (4) arranges the entry of said planned new connection into all bus traffic lists of the network.

**15.** Method according to claim 13 or 14, **characterized in that** a node (2) receiving a negative message from the recource manager (4) or the recource manager (4) arranges to delete all entries regarding the planned new connection from the plug traffic lists of all nodes (2, 3) that have already given a positive message regarding the request, if it respectively has enough recources to participate at said new connection.

**16.** Method according to anyone of claims 12 to 15, **characterized in that** a node (2) receiving a negative message from the recource manager (4) can pre-empt an existing connection to allow the set-up of the planned new connection by instructing a node (1) that has established a connection to another node (3) by reserving bandwidth to shut-down the connection.

**17.** Method according to anyone of claims 2 to 16, **characterized in that** a node (1) shutting-down a connection arranges the deletion of all entries regarding this connection in all lists where it occurs.

**18.** Method according to anyone of claims 1 to 17, **characterized in that** said network is a home network.

**19.** Method according to anyone of claims 1 to 18, **characterized in that** said network is an IEEE 1394 based network.

**20.** Method according to anyone of claims 1 to 19, **characterized in that** said network is an IEC 61883 based network.

**21.** Method according to anyone of claims 1 to 20, **characterized in that** said network includes wireless connections or is a wireless network.

**22.** Method according to anyone of claims 1 to 21, **characterized in that** said nodes (1, 2, 3) represent consumer electronic devices.

Fig. 1

1

**Node A (0)**

Node Speed:
200Mbit/s

Bus traffic:

- 938 Units at
200Mbit/s from
B to A
(30Mbit/s)

- 313 Units at
100Mbit/s from
A to C
(5Mbit/s)

2

**Node B (1)**

Node Speed:
200Mbit/s

Bus traffic:

- 938 Units at
200Mbit/s from
B to A
(30Mbit/s)

- 313 Units at
100Mbit/s from
A to C
(5Mbit/s)

3

**Node C (2)**

Node Speed:
100Mbit/s

Bus traffic:

- 938 Units at
200Mbit/s from
B to A
(30Mbit/s)

- 313 Units at
100Mbit/s from
A to C
(5Mbit/s)

5

Fig. 2

Fig. 3

```
        1                      2                      3
┌─────────────────┐  ┌─────────────────┐  ┌─────────────────┐
│ Node A (0)      │  │ Node B (1)      │  │ Node C (2)      │
│   Node Speed:   │  │   Node Speed:   │  │   Node Speed:   │
│   200Mbit/s     │  │   200Mbit/s     │  │   100Mbit/s     │
├─────────────────┤  ├─────────────────┤  ├─────────────────┤
│ Bus traffic:    │  │ Bus traffic:    │  │ Bus traffic:    │
│ - 938 Units at  │  │ - 938 Units at  │  │ - 938 Units at  │
│ 200Mbit/s from B to │ 200Mbit/s from B to │ 200Mbit/s from B to │
│ A (30Mbit/s)    │  │ A (30Mbit/s)    │  │ A (30Mbit/s)    │
│ - 313 Units at  │  │ - 313 Units at  │  │ - 313 Units at  │
│ 100Mbit/s from A to │ 100Mbit/s from A to │ 100Mbit/s from A to │
│ C (5Mbit/s)     │  │ C (5Mbit/s)     │  │ C (5Mbit/s)     │
│ Plug Traffic:   │  │ Plug Traffic:   │  │ Plug Traffic:   │
│ Total send/receive: │ Total send/receive: │ Total send: 20Mbit/s │
│ 50 Mbit/s       │  │ 60 Mbit/s       │  │ Total receive:  │
│ – Sink 30Mbit/s │  │ – Send 30Mbit/s to A │ 10Mbit/s      │
│ from B          │  │                 │  │ – Sink 5Mbit/s from │
│ – Send 5Mbit/s to C │             │  │ A               │
└─────────────────┘  └─────────────────┘  └─────────────────┘
```

B1: Capture 10Mbit/s ?

5

B2: OK

B3: Enter to Plug traffic list:
    Sink 10Mbit/s from B

        B4: Check own plug
            Enter to Plug traffic list:
            Send 10Mbit/s to A + C

**Fig. 4a**

Node A (0)     1

Node B (1)     2

Node C (2)     3

B5: Capture 10Mbit/s ?

B6: Failed

B7: Cancel (Sink 10Mbit/s from B)

B8: Delete from Plug
traffic list:
Sink 10Mbit/s from B

B9: Delete from Plug
traffic list:
Send 10Mbit/s to A

B10: Read Plug traffic list

B11: Plug Traffic:
Total send: 20Mbit/s
Total receive: 10Mbit/s
– Sink 5Mbit/s from A

B12: User Feedback

B13: Preempt

B14: Pre-empt( 5Mbit/s at a speed
of 100Mbit/s from A to C)

B15: User Feedback
B pre-empted
5Mbit/s from A to C

B16: Delete 5Mbit/s from A to
C at Plug and Bus Traffic list

B17: Stop( 5Mbit/s at a speed of 100Mbit/s from A to C)

B18: Delete 5Mbit/s from A
to C at Bus Traffic list

B19: Stop( 5Mbit/s at a speed of 100Mbit/s from A to C)

B20: Delete 5Mbit/s from A to
C at Plug and Bus Traffic list

Start with reservation again at B1

Fig. 4b

| Node A (0) | Node B (1) | Node C (2) |
|---|---|---|
| Node Speed: 200Mbit/s | Node Speed: 200Mbit/s | Node Speed: 100Mbit/s |
| Bus traffic: - 2350 Units at 200Mbit/s from A to B (75Mbit/s) - 313 Units at 100Mbit/s from A to C (5Mbit/s) Plug Traffic: Total send/receive: 100 Mbit/s – Send 75 Mbit/s to B – Send 5Mbit/s to C | Bus traffic: - 2350 Units at 200Mbit/s from A to B (75Mbit/s) - 313 Units at 100Mbit/s from A to C (5Mbit/s) Plug Traffic: Total send/receive: 200 Mbit/s – Sink 75Mbit/s from A | Bus traffic: - 2350 Units at 200Mbit/s from A to B (75Mbit/s) - 313 Units at 100Mbit/s from A to C (5Mbit/s) Plug Traffic: Total send: 20Mbit/s Total receive: 100Mbit/s – Sink 5Mbit/s from A |

IRM

C1: Check own Plug
Enter to Plug traffic list:
Send 70Mbit/s to C

C2: Capture 70Mbit/s?

C3: OK

C4: Enter to Plug traffic list: Sink 70Mbit/s from B

C5: allocate 4380 BW units

C6: failed

C7: Delete from Plug traffic list: Send 70Mbit/s to C

C8: Cancel (Sink 70Mbit/s from B)

C9: Delete from Plug traffic list: Sink 70Mbit/s from B

C10: Read own Bus traffic list

Fig. 5a

1 Node A (0)  2 Node B (1)  3 Node C (2)  4 IRM

5

C11: User Feedback

C12: Preempt
(75Mbit/s from A to B)

C13: Pre-empt( 75Mbit/s from A to B)

C14: User
Feedback :
B pre-empted
75Mbit/s from
A to C

C15: Delete 75Mbit/s from A to B
at plug and bus traffic list

C16: Stop(75Mbit/s from A to B)

C17: Delete 75Mbit/s from A to B
at plug and bus traffic list

C18: Stop(75Mbit/s from A to B)

C19: Delete 75Mbit/s from
A to B at bus traffic list

Fig. 5b

Fig. 5c

European Patent Office

**EUROPEAN SEARCH REPORT**

Application Number

EP 98 11 2500

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 603 099 A (IBM) 22 June 1994<br>* abstract *<br>* column 1, line 21-58 *<br>* column 3, line 11 - column 4, line 9 *<br>* column 5, line 26 - column 6, line 9 * | 1-22 | H04L12/56<br>H04L12/40 |
| A | EP 0 621 704 A (IBM) 26 October 1994<br>* abstract *<br>* page 4, line 21-38 *<br>* page 7, line 24 - page 9, line 31 * | 1-17 | |
| A | KUNZMAN A J ET AL: "1394 HIGH PERFORMANCE SERIAL BUS: THE DIGITAL INTERFACE FOR ATV" IEEE TRANSACTIONS ON CONSUMER ELECTRONICS, vol. 41, no. 3, August 1995, pages 893-900, XP000539552<br>* page 895, right-hand column, line 6 - page 896, left-hand column, line 22 * | 1-22 | |
| A | JENNINGS ROGER: "Fire on the Wire: The IEEE 1394 high performance serial bus" ADAPTEC,31 January 1997, page 1-7 XP002087275<br>http://www.adaptec.com/technology/standards/1394bus.html<br>* page 4, line 15 - page 5, line 24 *<br>* page 6, line 23-35 * | 1-22 | TECHNICAL FIELDS SEARCHED (Int.Cl.6)<br><br>H04L |

The present search report has been drawn up for all claims

| Place of search | Date of completion of the search | Examiner |
|---|---|---|
| THE HAGUE | 10 December 1998 | LAZARO LOPEZ, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 98 11 2500

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-1998

| Patent document cited in search report | | Publication date | Patent family member(s) | | Publication date |
|---|---|---|---|---|---|
| EP 0603099 | A | 22-06-1994 | US | 5367517 A | 22-11-1994 |
| | | | JP | 2527913 B | 28-08-1996 |
| | | | JP | 7015473 A | 17-01-1995 |
| EP 0621704 | A | 26-10-1994 | JP | 2642053 B | 20-08-1997 |
| | | | JP | 7015455 A | 17-01-1995 |
| | | | US | 5479404 A | 26-12-1995 |

EPO FORM P0459

For more details about this annex : see Official Journal of the European Patent Office, No. 12/82